# EUROPEAN PATENT SPECIFICATION

(11) **EP 2 202 097 B1**
(45) Date of publication and mention of the grant of the patent: **03.04.2013**
(21) Application number: 09014570.7
(22) Date of filing: 23.11.2009
(51) Int. Cl.: B60C 11/03, B60C 11/00, B60C 11/117

(54) **Pneumatic tire**
Luftreifen
Pneu

(30) Priority: 26.12.2008 JP 2008334102
(43) Date of publication of application: 30.06.2010
(73) Proprietor: Sumitomo Rubber Industries, Ltd., Hyogo-ken (JP)
(72) Inventor: Takeuchi, Jiro, Kobe-shi Hyogo 651-0072 (JP)
(74) Representative: Manitz, Finsterwald & Partner GbR

(56) References cited:
- EP-A1- 0 686 517
- DE-A1- 4 222 614
- JP-A- 8 085 308

## Description

### Background of the invention

The present invention relates to a pneumatic tire suitable for motorsports such as gymkhana/autocross, more particularly to a tread portion capable of improving the road grip performance in the early period of sport running and the high-speed durability.

Generally, in the pneumatic tires designed for high-speed sport running such as gymkhana or autocross, the ground contacting area of the tread portion is designed to be relatively large in order to improve the steering stability. Thus, the rigidity and rubber volume of the land portion(s) are increased. As a result, the temperature increase of the land portion(s) is relatively slow, therefore, in the early period of sport running, warming-up of the tire becomes insufficient, and accordingly the road grip performance becomes insufficient. On the other hand, after warmed up, the temperature distribution is liable to become uneven since the land portion is wide. As a result, there is a possibility that uneven wear is caused and the steering stability is deteriorated.

Further, under high-speed running conditions, since the generated heat tends to accumulate in the land portion, there is a possibility that the temperature is excessively increased and the high-speed durability is deteriorated.

Incidentally, the term "land portion" means the ground contacting part of the tread rubber of which top surface or radially outer surface can contact with the ground.

DE 42 22 614 A1, JP 8 085308 A, and EP 0 686 517 A1 disclose pneumatic tires in the prior art.

### Summary of the Invention

It is therefore, an object of the present invention to provide a pneumatic tire, in which, by forming blind holes at specific positions of the land portion,
in the initial stage of sports running, the temperature increase of the land portion is promoted to improve the road grip performance, and
after the initial stage, uneven temperature distribution in the land portion and an excessive increase of the temperature can be controlled, and thereby possible deterioration of the steering stability and occurrence of uneven wear can be prevented to improve the high-speed durability.

According to the present invention, a pneumatic tire comprises:
a tread portion provided with a plurality of tread grooves defining a tread pattern,
the tread pattern formed by arranging a pattern unit repeatedly in the tire circumferential direction,
the pattern unit comprising a plurality of blind holes opened at the tread surface, wherein
the number of the blind holes in the pattern unit is 2 to 18, and
the number of the repeatedly-arranged pattern units around the tire is 10 to 20.

Preferably, the blind holes are disposed in at least a crown region and a pair of shoulder regions, wherein
the crown region is defined as centered on the tire equator and having a width of 1/3 times the tread width TW, and
the shoulder region is defined as extending towards the tire equator from the tread edge by a width of 1/6 times the tread width TW.

Here, the tread width TW is the axial distance between the tread edges TE measured in a normally inflated unloaded condition of the tire. The tread edges TE are the axial outermost edges of the ground contacting patch (camber angle=0) in a normally inflated loaded condition.

The normally inflated unloaded condition is such that the tire is mounted on a standard wheel rim and inflate to a standard pressure but loaded with no tire load.

The normally inflated loaded condition is such that the tire is mounted on the standard wheel rim and inflate to the standard pressure and loaded with the standard tire load.

The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load Capacity" in ETRTO, the maximum value given in the above-mentioned table in TRA or the like. In case of passenger car tires, however, the standard pressure is uniformly defined by 180 kPa.

In the following description, various dimensions, positions and the like refer to those under the normally inflated unloaded condition of the tire unless otherwise noted.

### Brief Description of the Drawings

Fig.1 is a partial developed plan view of a pneumatic tire according to the present invention showing a tread pattern.
Fig.2 is an enlarged view showing a pattern unit of the tread pattern.
Fig.3 is a schematic perspective view of the tire for explaining an arrangement of the pattern unit according to a variable pitching method.
Fig.4(A) is a perspective view showing a perpendicular blind hole.
Fig.4(B) is a perspective view showing an oblique blind hole.
Fig.5 is a view similar to Fig.2 showing zones in which blind holes are disposed.
Figs.6(A) and 6(B) are top views of oblique blind holes.
Figs.7(A) and 7(B) are vertical cross sectional views of the oblique blind holes in a crown region and shoulder region.

### Description of the Preferred Embodiments

In the drawings, pneumatic tire 1 according to the present invention comprises a tread portion 2 provided with a tread pattern TP.

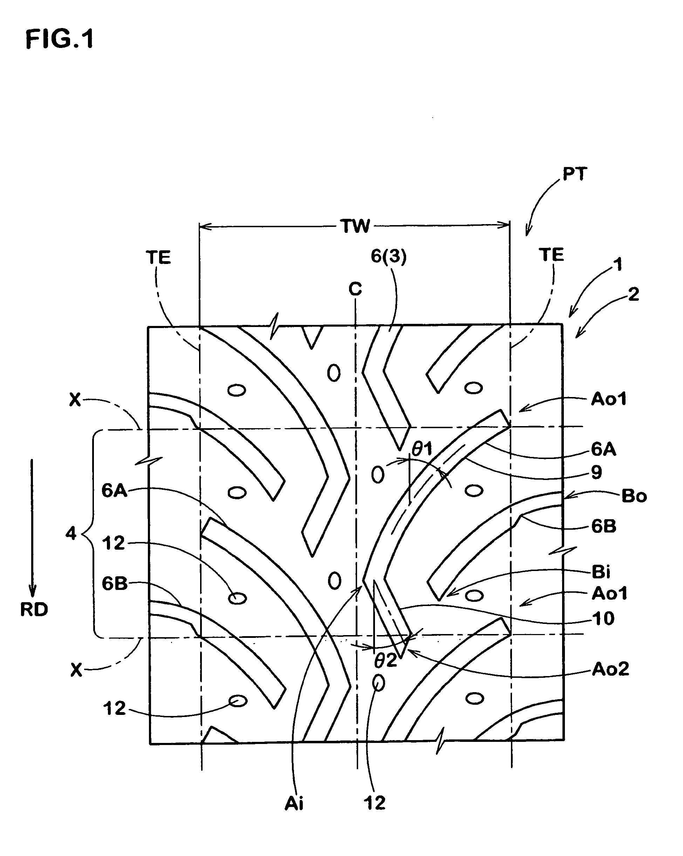

usually, a tread pattern for passenger car tires includes a plurality of independent tread elements such as block, lug and rib. In this embodiment, however, as shown in Fig.1, the tread pattern TP includes no independent tread element, and rather includes independent tread grooves 3. There is no groove extending continuously in the tire circumferential direction. Further, there is no groove extending continuously across the entire width of the tread portion 2.

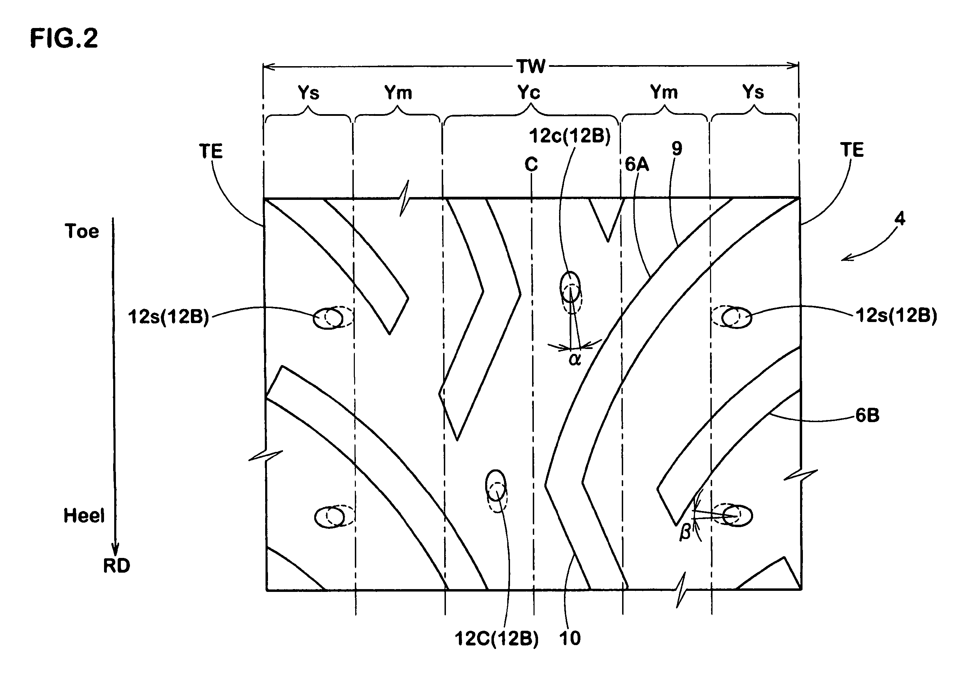

The tread pattern TP is a unidirectional tread pattern. The arrowed line RD in Fig.2 indicates the designed intended rotational direction of the tire. Accordingly, in the ground contacting patch, the toe-side and heel-side are fixed in relation to the intended rotational direction as shown in Fig.2.

The tread grooves 3 include a plurality of oblique grooves 6 extending obliquely with respect to the tire circumferential direction.

In this embodiment, there is no groove extending substantially parallel with the tire axial direction. The oblique grooves 6 include first oblique grooves 6A and second oblique grooves 6B.

The first oblique groove 6A extends from an axial position which is near the tire equator C and on one side of the tire equator C, towards the tread edge TE on the same side of the tire equator C.

The first oblique groove 6A in this example is made up of:
a main groove part 9 extending from its axially inner end Ai positioned near the tire equator C to its axially outer end Ao1 positioned near the tread edge TE, while inclining towards the toe-side in the designed rotational direction of the tire; and
a sub groove part 10 extending from its axially inner end common to the above-mentioned inner end Ai to its axially outer end Ao2, while inclining towards the heel-side in the designed rotational direction of the tire, and terminating without joining any other tread groove.

Here, the term "near" means that the axial distance between the relevant positions is not more than 12 % of the tread width TW.

The second oblique groove 6B is disposed between the circumferentially adjacent two first oblique grooves 6A.

The second oblique groove 6B extends from its axially inner end Bi positioned axially outward of the outer end Ao2 of the sub groove part 10 to the tread edge TE, while inclining substantially parallel with the main groove part 9.

In this example, the inner end Bi is positioned substantially at the axially intermediate position between the tire equator C and tread edge TE, and the axially outer end Bo thereof is positioned beyond the tread edge TE.

In order that the water on the road surface is effectively removed from the ground contacting part of the tread, while maintaining a high tread pattern rigidity,
the inclination angle θ1 of the main groove part 9 is set in a range of from 10 to 50 degrees with respect to the tire circumferential direction, and
the inclination angle θ2 of the sub groove part 10 is also set in a range of from 10 to 50 degrees with respect to the tire circumferential direction.

From a point of view of the drainage and the steering stability, it is preferred that the main groove part 9 and the second oblique groove 6B are each curved in an arc shape such that the inclination angle θ1 is gradually increased from the axially inside to the axially outside.

However, aside from such an arc, polygonal lines may be used. Further, even a straight line may be used.

As explained, in the tread pattern TP in this embodiment, the tread grooves 3 are independent from each other. Accordingly, the tread portion 2 is provided with a large single land area continuous in the tire circumferential direction and axial direction. Thereby, the tread pattern rigidity is increased to improve the steering stability.

Here, the term "land area" is used in contrast with the term "sea area (namely, grooved area)" of the tread portion 2. The ground contacting top surface or radially outer surface of the land portion corresponds to the land area.

In this embodiment, in order to increase the tread pattern rigidity in the tire-equator area, a part of the tread pattern on one side of the tire equator C is circumferentially shifted from a part of the tread pattern on the other side of the tire equator C so that the above-mentioned inner ends Ai are staggered along the tire equator C. With respect to the tire circumferential direction, the inner ends Ai on one side of the tire equator C are positioned at the substantially intermediate positions between the inner ends Ai on the other side of the tire equator C. In other words, between one half of the tread pattern on one side of the tire equator C and the other half, the phase of circumferential pitches is shifted by about one half pitch.

According to the present invention, as shown in Fig.2, the tread portion 2 is provided with a plurality of independent blind holes 12 which open at the tread surface 2s.

The number (m) of the blind holes 12 is set in a range of from 2 to 18 per a pattern unit 4.

Here, the pattern unit 4 is a minimum repeating unit of the tread pattern TP. The pattern unit 4 extends from one of the tread edges to the other. The above-mentioned tread pattern TP is formed by circumferentially repeating the pattern unit 4. If the pattern unit 4 is further divided into two or more parts, the tread pattern TP can not be formed by repeating any one of the divided parts.

Basically, the concept of a pattern unit is based on a design method of a tread pattern or a manufacturing method of a tire, therefore, if only a finished tire is given, there are plural ways of determining a pattern unit.

In the example shown in Fig,1, used as the border lines of the pattern unit 4 are straight lines X extending across the entire tread width in parallel with the tire axial direction, through the outer ends Ao of the first oblique grooves 6A disposed on one side of tire equator C.

As another example, straight lines (not shown) extending across the entire tread width in parallel with the tire axial direction, through the inner ends Ai of the first oblique grooves 6A disposed on one side of tire equator C can be used as the border lines of the pattern unit 4.

Furthermore, aside from straight lines, polygonal lines can be used as far as the defined part is a minimum repeating unit.

Anyhow, the total number N of the pattern units 4 arranged around the tire, is set in a range of from 10 to 20.

The values in this range are very small when compared with those of the general passenger car tires. This facilitates the increase in the tread pattern rigidity, and it becomes possible to provide a superior steering stability required for a high-performance high-speed tire suitable for motorsports especially gymkhana/autocross.

Incidentally, as well known in the tire art, in order to reduce a tire noise, so called variable pitching method is usually employed when circumferentially repeating a pattern unit. Thus, in the case of a variable pitching method, the completed tread pattern is made up of circumferentially arranged pattern units 4 which are geometrically identical but which has two or more different pitch lengths(namely, circumferential dimensions). Such plural kinds of pattern units 4 having two or more different pitch lengths are arranged in a specific sequence in the tire circumferential direction.

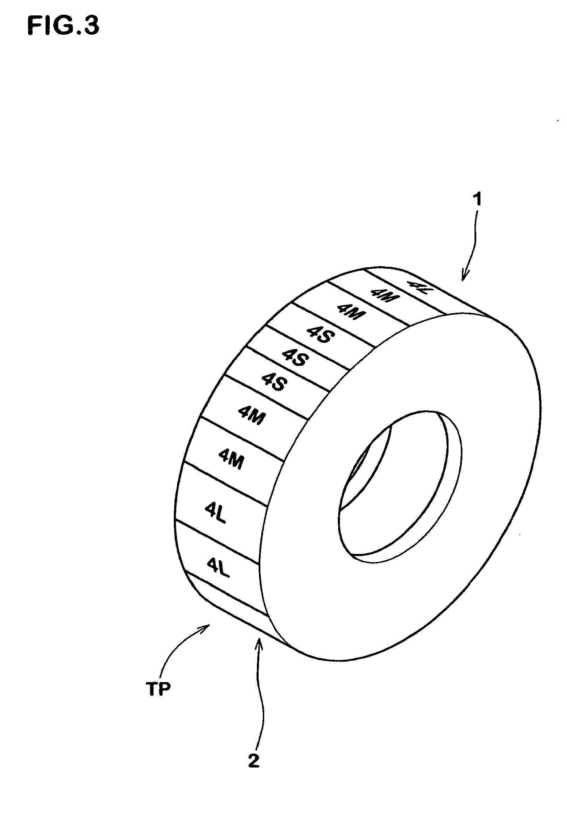

In this embodiment, three different pitch lengths are used, therefore, as shown in Fig.3, three kinds of pattern units 4 which are a pattern unit 4L having a maximum pitch length, a pattern unit 4S having a minimum pitch length and a pattern unit 4M having a medium pitch length are used.

Each of the pattern units 4L, 4M and 4S can be repeated regularly or irregularly.

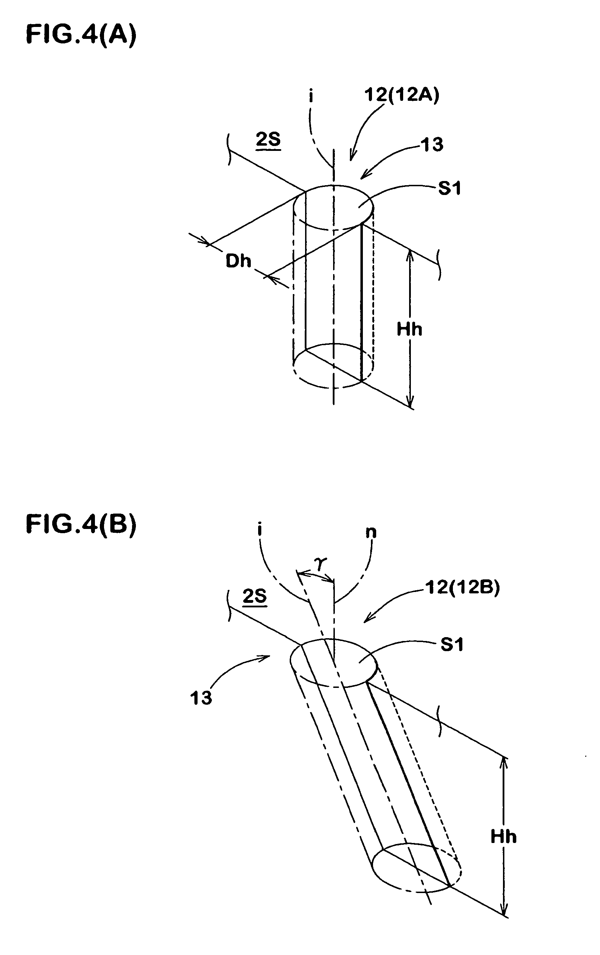

As shown in Figs.4(A) and 4(B), the blind hole 12 is a circular hole having a substantially circular shape in its cross section perpendicular to the center line (i) of the blind hole 12.

The blind hole 12 has a depth Hh of from 3 to 5 mm from the tread surface 2S, and a diameter Dh of from 2 to 5 mm at least at the opening 13 at the tread surface 2S.

The blind hole 12 can be a perpendicular blind hole 12A of which center line (i) is perpendicular to the tread surface 2S as shown in Fig.4(A), or an oblique blind hole 12B of which center line (i) is inclined with respect to the normal line (n) to the tread surface 2S as shown in Fig.4(B).

In the case of the oblique blind hole 12B, since the contour shape of the opening 13 becomes an elliptical shape, the diameter of a perfect circle whose area is equal to the area S1 of the opening 13 may be used for the above-mentioned diameter Dh.

The blind holes 12 can further the motions of the tread rubber in the land portion, specifically, its surface layer having a thickness of about one half of the overall thickness of the tread rubber. Accordingly, in the initial stage of sport running, the tread rubber is quickly warmed up to increase the initial stage road grip.

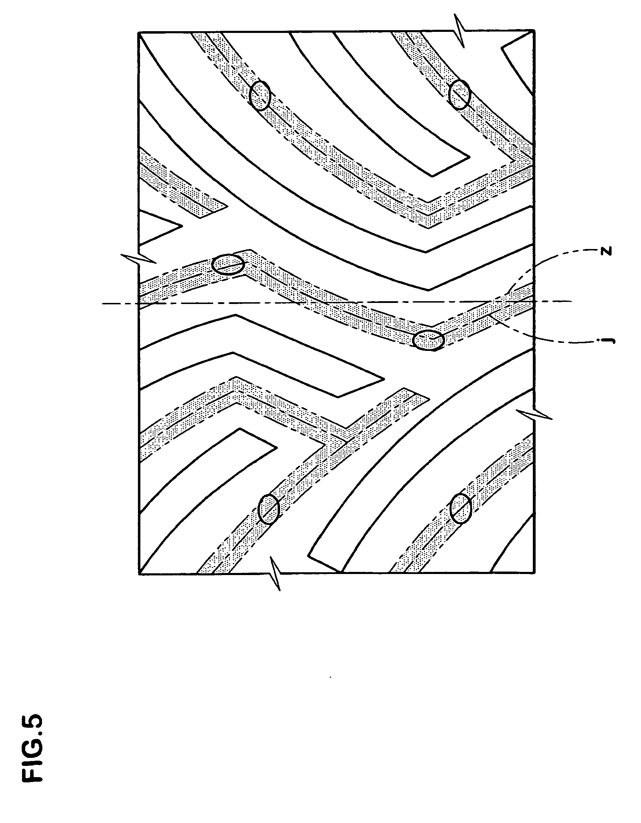

As generally shown in Fig.5, the blind holes 12 are disposed such that the centroids of their openings 13 are positioned within central zones (z).

The central zones (z) are defined as extending along center lines (j) between the adjacent tread grooves 3, and centered on the respective center lines (j), and having a width of 5 mm when measured perpendicularly to the center line (j).

Thereby, the mobility of the surface layer is increased in the central zones (z), and the temperature of the surface layer can be evened over the land portion. As a result, deterioration of the steering stability and the occurrence of uneven wear can be prevented. Further, after warmed up, the blind holes 12 can bring out a heat radiation effect to prevent an excessive increase in the temperature of the land portion during high speed running, therefore, the high-speed durability can be improved.

If the number (m) of the blind holes 12 per one pattern unit 4 is less than 2, the above advantageous effects of the blind holes 12 can not be obtained. If more than 18, the steering stability is deteriorated. Therefore, the number (m) of the blind holes 12 is not less than 2, preferably not less than 6, but not more than 18, preferably not more than 12.

when the perpendicular blind hole 12A and oblique blind hole 12B having the same depth Hh are compared with each other, the oblique blind hole 12B has a less negative effect on the tread pattern rigidity and also on the steering stability. Further, the superficial area of the oblique blind hole 12B becomes larger than that of the perpendicular blind hole 12A, therefore, with respect to the heat radiation effect, the oblique blind hole 12B is superior to the perpendicular blind hole 12A.

In the case of the oblique blind hole 12B, as shown in Fig.4(B), it is preferable that the center line (i) of the oblique blind hole 12B is inclined at an angle γ of from 30 to 60 degrees with respect to the normal line (n).

If the angle γ is less than 30 degrees, the above-mentioned advantageous effect by the inclination can not be obtained.

If more than 60 degrees, the rigidity and strength of the tread rubber are decreases partially at the positions radially outside the oblique blind holes 12B, and as a result, there are drawbacks such that damage and uneven wear are liable to occur. Further, the production efficiency of the tire is decreased.

In this embodiment, in order to enhance the effects of the blind holes 12, the blind holes 12 are provided in at least a crown region Yc and a pair of shoulder regions Ys of the tread portion as shown in Fig.2. However, no blind hole is formed in a pair of middle regions Ym.

Here, the crown region Yc is defined as centered on the tire equator C and having an axial width of 1/3 times the tread width TW. The middle regions Ym are disposed one on each side of the crown region Yc and each having an axial width of 1/6 times the tread width TW. The shoulder regions Ys are disposed between the middle regions Ym and the tread edges TE and each having a width of 1/6 times the tread width TW.

Under critical running conditions, the crown region Yc is required to have a high rigidity in the tire circumferential direction, and the shoulder regions Ys are required to have a high rigidity in the tire axial direction.

In order to achieve both at the same time, it is preferable that the shape or configuration of the blind hole is changed between the blind holes 12c in the crown region Yc and the blind hole 12s in the shoulder regions Ys, by changing at least one of the cross sectional shape, various dimensions, inclining angle γ, and inclining direction of the blind hole.

In this embodiment, the blind holes 12c in the crown region Yc are an oblique blind hole 12B inclined to one circumferential direction with respect to the normal line (n). The blind holes 12s in the shoulder regions Ys are an oblique blind hole 12B inclined axially inwards with respect to the normal line (n).

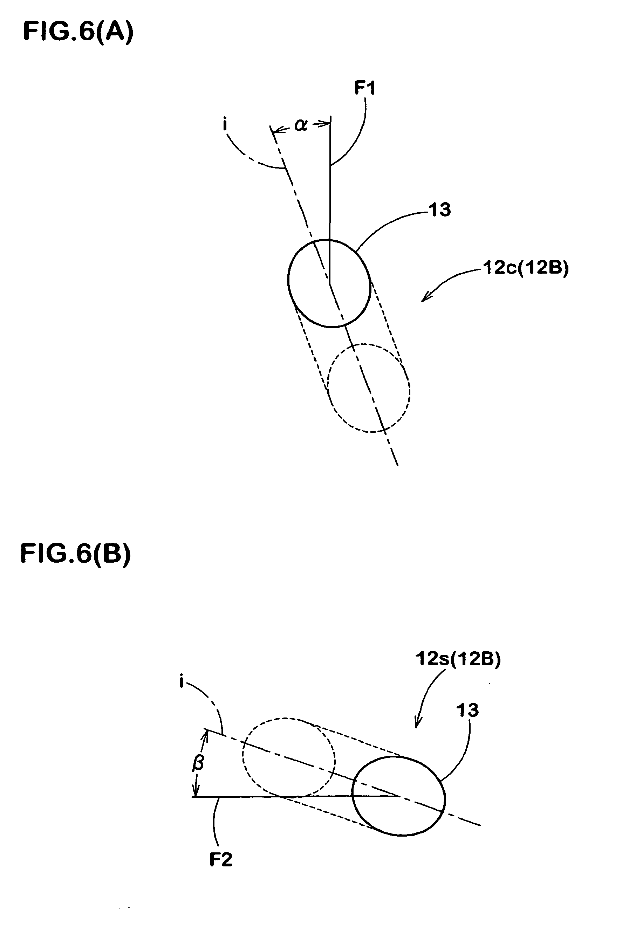

As shown in Figs.6(A) and 6(B), when viewed from above the blind hole perpendicular to the tread surface 2S,
the center line (i) of the blind hole 12c in the crown region Yc is at an angle α of not more than 30 degrees with respect to the tire circumferential direction F1, and
the center line (i) of the blind hole 12s in the shoulder regions Ys is at an angle β of not more than 30 degrees with respect to the tire axial direction F2.

If the angle α, β is more than 30 degrees, the steering stability tends to deteriorate. Therefore, the angles α and β are preferably not more than 25 degrees, more preferably not more than 20 degrees.

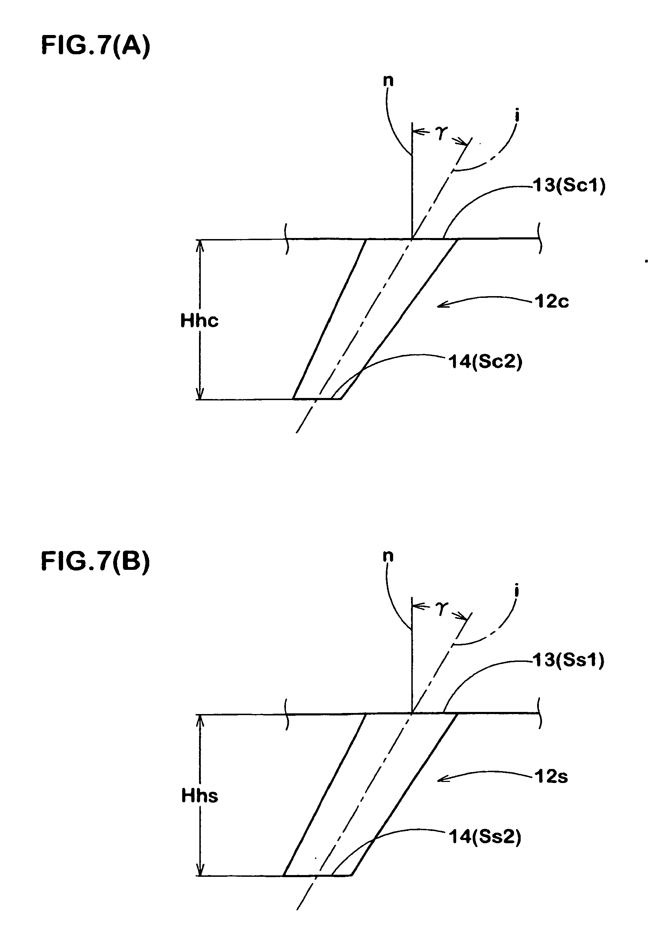

Fig.7(A) is a vertical sectional view of the blind hole 12c including the center line (i) and normal line (n).

Fig.7(BA) is a vertical sectional view of the blind hole 12s including the center line (i) and normal line (n).

As shown in these figures, the angle γ between the center line (i) and normal line (n) is set in the range of from 30 to 60 degrees as explained above.

In this embodiment, the blind holes 12c in the crown region Yc are inclined to the heel-side because the effect to control uneven wear becomes high in comparison with those inclined to the toe-side.

But, the blind holes 12c are not to be limited to such configuration. They may be inclined to the toe-side.

In the crown region Yc, when compared with the regions Ys and Ym, the ground pressure is high, and movements of the surface layer are large. Accordingly, the tread rubber is warmed up easily, and there is a possibility that the temperature becomes excessively increased.

Therefore, in comparison with the regions Ys and Ym, the crown region Yc has a less need for making the surface layer easy to move and has a more need for heat radiation.

In this embodiment, therefore, the blind hole 12c in the crown region Yc is configured such that the ratio Sc1/Sc2 of the area Sc1 of the opening 13 to the area sc2 of the bottom 14 is 1.1 to 3.0; and the blind hole 12s in the shoulder regions Ys is configured such that the ratio Ss1/Ss2 of the area Ss1 of the opening 13 to the area ss2 of the bottom 14 is 1.0 to 2.5. Further, the ratio Ss1/Ss2 is set to be smaller than the ratio Sc1/Sc2. As a result, the blind holes 12c and 12s are a tapered hole of which diameter Dh becomes decreased from the opening to the bottom. The taper angle of the blind hole 12c is larger than that of the blind hole 12s, therefore, while maintaining the heat radiation effect owing to the relatively large opening area, the crown region Yc can be provided with less mobility when compared with the shoulder regions Ys.

In order to relatively increase the heat radiation from the blind holes 12c, it is further possible to set the depth Hhc of the blind holes 12c to be larger than the depth Hhs of the blind holes 12s in the shoulder regions Ys.

### Comparison tests

Pneumatic tires of size 235/45R17 (rim size 8JJX17) were prepared based on the tread pattern shown in Fig.1, and the following comparison tests were conducted. Except for the specifications shown in Table 1, all the tires had the same structure.

### Lap time and steering stability:

A 2000cc sports car provided on the four wheels with test tires (Tire pressure 200 kPa) was run in a gymkhana course officially approved from the Japan Automobile Federation and the lap time was measured. Further, the test driver evaluated the steering stability on the assumption that Ref.1 is 100, wherein the larger the value, the better the steering stability.

### Apparent condition of worn tire:

After ran ten laps in the gymkhana course, the worn tread portion was visually inspected, and the apparent condition was evaluated on the assumption that Ref.1 is 100, wherein the larger the value, the better the apparent condition.

### High-speed durability:

The test tire mounted on a standard rim (size 8JJX17) was subjected to an indoor wheel test prescribed by the Procedure for Load/speed Performance Tests of the Economic commission for Europe (ECE-30). (Tire inflation pressure: 320 kPa, Tire load: 4.34kN) The running speed was increased every 10 minutes at steps of 10 km/h from an initial speed of 230 km/h up to 290 km/h, and the speed at which any failure occurred was measured together with the running time at that speed.

**Table 1**

| Tire | Ref.1 | Ex.1 | Ex.2 |
|---|---|---|---|
| Number N *1 | 10 | 15 | 20 |
| Number m *2 | 0 | 6 | 12 |
| Crown region | | | |
| Blind hole | | | |
| Opening diameter Dh (mm) | - | 4 | 4 |
| Depth Hhc (mm) | - | 5 | 5 |
| Angle α (deg.) | - | 20 | 30 |
| Angle γ (deg.) | - | 30 | 30 |
| Area ratio Sc1/Sc2 | - | 3 | 1 |
| Shoulder region | | | |
| Blind hole | | | |
| Opening diameter Dh (mm) | - | 4 | 4 |
| Depth Hhs (mm) | - | 5 | 5 |
| Angle β (deg.) | - | 20 | 30 |
| Angle γ (deg.) | - | 30 | 30 |
| Area ratio Ss1/Ss2 | - | 2.5 | 1 |
| Lap time | | | |
| 1st lap | 1'21"55 | 1'21"07 | 1'21"47 |
| 2nd lap | 1'21"24 | 1'20"88 | 1'21"25 |
| 3rd lap | 1'21"07 | 1'20"74 | 1'21"24 |
| 4th lap | 1'20"70 | 1'20"66 | 1'21"69 |
| 5th lap | 1'20"44 | 1'20"88 | 1'22"04 |
| 6th lap | 1'20"87 | 1'20"95 | 1'22"24 |
| 7th lap | 1'21"47 | 1'21"15 | 1'22"33 |
| Steering stability | 115 | 110 | 100 |
| High-speed durability | unacceptable | very good | excellent |
| speed(km/h)/time(minute) | 250/9 | 280/5 | 290/10+3 |
| Apparent condition | 95 | 110 | 100 |

| | | | |
|---|---|---|---|
| *1) The number N of the repeatedly-arranged pattern units around the tire. *2) The number m of the blind holes per one pattern unit. | | | |

As described above, in the pneumatic tires according to the present invention, the surface layer of the land portion is provided with appropriate mobility by the blind holes, therefore, heat generation is promoted, and the road grip performance in the initial stage of sport running can be improved.

Thereafter, the distribution of the temperature of the land portion is evened, therefore, a deterioration of the steering stability and occurrence of uneven wear due to uneven temperature distributions can be prevented.

Further, the blind holes exert a heat radiation effect, and an excessive temperature rise in the land portion can be prevented, and thereby the high-speed durability is improved.

## Claims

1. A pneumatic tire (1) comprising:
a tread portion (2) provided with a plurality of tread grooves (3) defining a tread pattern (TP),
wherein the tread portion (2) is provided with no independent ground-contacting tread element such that in the tread portion (2), there is no groove extending continuously in the tire circumferential direction, and further, there is no groove extending continuously across the entire width of the tread portion (2),
the tread pattern (TP) is formed by arranging a pattern unit (4) repeatedly in the tire circumferential direction,
said pattern unit (4) comprises a plurality of blind holes (12) opened at the tread surface (2s), wherein
the number of said plurality of blind holes (12) is 2 to 18, and
the number of the repeatedly-arranged pattern units (4) around the tire is 10 to 20.

2. The pneumatic tire (1) according to claim 1, wherein
the blind holes (12, 12c, 12s) are disposed in at least a crown region (YC) and a pair of shoulder regions (Ys), wherein
the crown region (YC) is defined as centered on the tire equator (C) and having a width of 1/3 times the tread width TW, and
the shoulder region (YS) is defined as extending towards the tire equator (C) from the tread edge (TE) by a width of 1/6 times the tread width TW, and
with respect to the configuration of the blind hole (12c, 12s), the blind holes (12c) in the crown region (Yc) are different from the blind holes (12s) in the shoulder region (YS).

3. The pneumatic tire (1) according to claim 2, wherein
the blind holes (12) are deeper in the crown region (Yc) than the shoulder regions (YS).

4. The pneumatic tire (1) according to claim 1 wherein
the center lines (i) of the blind holes (12) are inclined with respect to a normal line (n) to the tread surface (2s).

5. The pneumatic tire (1) according to claim 2, wherein
when viewed from above the blind hole (12) perpendicularly to the tread surface (2s),
the center line (i) of the blind hole (12c) disposed in the crown region (YC) extends at an angle α of not more than 30 degrees with respect to the tire circumferential direction, and
the center line (i) of the blind hole (12s) disposed in the shoulder region (Ys) extends at an angle β of not more than 30 degrees with respect to the tire axial direction.

6. The pneumatic tire (1) according to claim 2, wherein
the blind hole (12) has a bottom surface and a sidewall surface extending from the bottom surface to the tread surface (2s),
the blind hole (12c) disposed in the crown region (YC) has a ratio sc1/sc2 of the area sc1 of the opening at the tread surface (2s) to the area sc2 of the bottom face which is 1.1 to 3.0, and
the blind hole (12s) disposed in the shoulder region (Ys) has a ratio ss1/ss2 of the area ss1 of the opening at the tread surface (2s) to the area ss2 of the bottom face which is 1.0 to 2.5, and the ratio ss1/ss2 is less than the ratio sc1/sc2.

## Patentansprüche

1. Luftreifen (1), umfassend:
einen Laufflächenabschnitt (2), der mit einer Vielzahl von Laufflächenrillen (3) versehen ist, die ein Laufflächenprofil (TP) definieren,
wobei der Laufflächenabschnitt (2) mit keinem unabhängigen Bodenkontakt-Laufflächenelement versehen ist, so dass es in dem Laufflächenabschnitt (2) keine Rille gibt, die sich durchgehend in der Reifenumfangsrichtung erstreckt, und es darüber hinaus keine Rille gibt, die sich durchgehend über die gesamte Breite des Laufflächenabschnitts (2) hinweg erstreckt,
wobei der Laufflächenabschnitt (TP) gebildet ist, indem eine Profileinheit (4) wiederholt in der Reifenumfangsrichtung angeordnet ist,
wobei die Profileinheit (4) eine Vielzahl von Sacklöchern (12) umfasst, die an der Laufflächen-Oberfläche (2s) geöffnet sind, wobei
die Zahl der Vielzahl von Sacklöchern (12) 2 bis 18 beträgt, und
die Zahl der wiederholt angeordneten Profileinheiten (4) um den Reifen herum 10 bis 20 beträgt.

2. Luftreifen (1) nach Anspruch 1, wobei
die Sacklöcher (12, 12c, 12s) in zumindest einem Kronenbereich (Yc) und einem Paar Schulterbereichen (Ys) angeordnet sind, wobei
der Kronenbereich (Yc) derart definiert ist, dass er auf dem Reifenäquator (C) zentriert ist und eine Breite des 1/3-fachen der Laufflächenbreite TW aufweist, und
der Schulterbereich (Ys) derart definiert ist, dass er sich zu dem Reifenäquator (C) von der Laufflächenkante (TE) mit einer Breite des 1/6-fachen der Laufflächenbreite TW erstreckt, und
mit Bezug auf die Ausgestaltung des Sacklochs (12c, 12s) die Sacklöcher (12c) in dem Kronenbereich (Yc) sich von den Sacklöchern (12s) in dem Schulterbereich (Ys) unterscheiden.

3. Luftreifen (1) nach Anspruch 2,
wobei die Sacklöcher (12) in dem Kronenbereich (Yc) tiefer als in den Schulterbereichen (Ys) sind.

4. Luftreifen (1) nach Anspruch 1,
wobei die Mittellinien (i) der Sacklöcher (12) mit Bezug auf eine senkrechte Linie (n) zu der Laufflächen-Oberfläche (2s) geneigt sind.

5. Luftreifen (1) nach Anspruch 2, wobei,
wenn von oberhalb des Sacklochs (12) senkrecht zu der Laufflächen-Oberfläche (2s) geblickt wird,
die Mittellinie (i) des Sacklochs (12c), die in dem Kronenbereich (Yc) angeordnet ist, sich unter einem Winkel a von nicht mehr als 30 Grad mit Bezug auf die Reifenumfangsrichtung erstreckt, und
die Mittellinie (i) des Sacklochs (12s), die in dem Schulterbereich (Ys) angeordnet ist, sich unter einem Winkel β von nicht mehr als 30 Grad mit Bezug auf die Reifenaxialrichtung erstreckt.

6. Luftreifen (1) nach Anspruch 2, wobei
das Sackloch (12) eine Boden-Oberfläche und eine Seitenwand-Oberfläche aufweist, die sich von der Boden-Oberfläche zu der Laufflächen-Oberfläche (2s) erstreckt,
das Sackloch (12c), das in dem Kronenbereich (Yc) angeordnet ist, ein Verhältnis Sc1/Sc2 der Fläche Sc 1 der Öffnung an der Laufflächen-Oberfläche (2s) zu der Fläche Sc2 der Bodenfläche aufweist, das 1,1 1 bis 3,0 beträgt, und
das Sackloch (12s), das in dem Schulterbereich (Ys) angeordnet ist, ein Verhältnis Ss1/Ss2 der Fläche Ss 1 der Öffnung an der Laufflächen-Oberfläche (2s) zu der Fläche Ss2 der Bodenfläche aufweist, das 1,0 bis 2,5 beträgt, und das Verhältnis Ss1/Ss2 kleiner als das Verhältnis Sc1/Sc2 ist.

## Revendications

1. Bandage pneumatique (1) comprenant :
une portion formant bande de roulement (2) dotée d'une pluralité de rainures de roulement (3) définissant un motif de roulement (TP),
dans lequel la portion formant bande de roulement (2) n'est dotée d'aucun élément de roulement indépendant en contact avec le sol de telle façon que, dans la portion formant bande de roulement (2), il n'existe aucune rainure s'étendant en continu dans la direction circonférentielle du pneumatique, et en outre qu'il n'existe aucune rainure s'étendant en continu à travers la largeur entière de la portion formant bande de roulement (2),
le motif de roulement (TP) est formé en arrangeant une unité de motif (4) de façon répétée dans la direction circonférentielle du pneumatique, ladite unité de motif (4) comprend une pluralité de trous borgnes (12) ouverts au niveau de la surface de roulement (25), dans lequel le nombre de ladite pluralité de trous borgne (12) est de 2 à 18, et
le nombre des unités de motifs arrangées de façon répétée (4) autour du pneumatique est de 10 à 20.

2. Bandage pneumatique (1) selon la revendication 1, dans lequel
les trous borgnes (12, 12c, 12s) sont disposés dans au moins une région de couronne (Yc) et une paire de régions d'épaulement (Ys), dans lesquelles
la région de couronne (Yc) est définie comme étant centrée sur l'équateur du pneumatique (C) et ayant une largeur de 1/3 fois la largeur de roulement Tw, et
la région d'épaulement (Ys) est définie comme s'étendant vers l'équateur du pneumatique (C) depuis la bordure de roulement (TE) sur une largeur de 1/6 fois la largeur de roulement Tw, et
à l'égard de la configuration des trous borgnes (12c, 12s), les trous borgnes (12c) dans la région de couronne (Yc) sont différents des trous borgnes (12s) dans la région d'épaulement (Ys).

3. Bandage pneumatique (1) selon la revendication 2, dans lequel les trous borgnes (12) sont plus profonds dans la région de couronne (Yc) que dans la région d'épaulement (Ys).

4. Bandage pneumatique (1) selon la revendication 1, dans lequel les lignes centrales (i) des trous borgnes (12) sont inclinées par rapport à une ligne normale (n) à la surface de roulement (25).

5. Bandage pneumatique selon la revendication 2, dans lequel lorsqu'on regarde depuis le dessus vers le trou borgne (12) perpendiculairement à la surface de roulement (2s) :
la ligne centrale (i) du trou borgne (12c) disposé dans la région de couronne (Yc) s'étend sous un angle α qui ne dépasse pas 30° par rapport à la direction circonférentielle automatique, et
la ligne centrale (i) du trou borgne (12s) disposé dans la région d'épaulement (Ys) s'étend sous un angle β qui ne dépasse pas 30° par rapport à la direction axiale du pneumatique.

6. Bandage pneumatique (1) selon la revendication 2, dans lequel
le trou borgne (12) a une surface de fond et une surface de paroi latérale s'étendant depuis la surface de fond jusqu'à la surface de roulement (2s),
le trou borgne (12c) disposé dans la région de couronne (Yc) présente un rapport Scl/Sc2 de la superficie Sc1 de l'ouverture au niveau de la surface de roulement (2s) sur la superficie Sc2 de la face au fond qui est de 1,1 à 3,0, et
le trou borgne (12s) disposé dans la région d'épaulement (Ys) présente un rapport Ssl/Ss2 de la superficie Ss1 de l'ouverture au niveau de la surface de roulement (2s) sur la superficie Ss2 de la face au fond qui est de 1,0 à 2,5, et le rapport Ssl/Ss2 est inférieur au rapport Scl/Sc2.
